# EUROPEAN PATENT SPECIFICATION

(11) **EP 2 409 945 B1**
(45) Date of publication and mention of the grant of the patent: **04.03.2015**
(21) Application number: 11174633.5
(22) Date of filing: 20.07.2011
(51) Int. Cl.: B67B 1/00, B65G 47/256

(54) **Cork stopper orienting device**
Vorrichtung zum Ausrichten von Korkstopfen
Dispositif pour orienter des bouchons de liège

(30) Priority: 21.07.2010 IT FI20100153
(43) Date of publication of application: 25.01.2012
(73) Proprietor: Meacci S.r.l., 51018 Pieve a Nievole (Pistoia) (IT)
(72) Inventor: Cavallini, Riccardo, 51015 Monsummano Terme (Pistoia) (IT)
(74) Representative: Soldatini, Andrea

(56) References cited:
- EP-A1- 0 395 549
- EP-A1- 1 125 886

## Description

The present invention refers to the field of apparatuses for corking bottles and in particular it refers to a device for orienting, in the same direction, cork stoppers that present an end having a chamfer edge such as those used for corking bottles of spumante, champagne and sparkling wines in general, according to the preamble of claim 1 and as known from EP 1 125 886 A1.

Such a chamfered end is that which, once the cork stopper is inserted into a neck of the bottle, generates the typical enlargement of the spumante cork stopper.

For the purpose of being inserted in the neck of the bottle, the cork stopper must be supplied to an appropriate device usually called *"corking machine";* the cork stoppers have to enter in the corking machine all facing the same direction so as to ensure the correct insertion inside the bottle: in particular the cork stoppers have to be oriented so that the end with a chamfer edge results, once they have been inserted, outside the neck of the bottle.

However, the corks are initially contained in bags and packages and are therefore commonly available in a pell-mell manner. Consequently, the cork stoppers have to be suitably oriented before being supplied to the corking machine. Commonly systems for detecting the chamfer, which is used as a reference system and as an element of asymmetry, are used for orienting the cork stoppers.

Currently, there are mainly three known orienting devices: mechanical, gravity force and optical devices.

Orienting devices of the mechanical-type use an appropriate tracer on which the profile of the chamfer of the cork is reproduced. Through pushing means (like for example linear actuators) the cork is obliged to pass between the tracer and an abutment surface.

The abutment surface is rigidly connected, instead the tracer can oscillate since it is simply hinged to the structure of the machine. When the cork passes through the device with the chamfer facing towards the tracer, it keeps its original position. Instead when the cork passes with the chamfer facing in the opposite direction, the spring that supports the tracer yields, under the strain exerted by the cork during the passage, thus activating a sensor. The sensor sends a signal to control the rotation of the cork stopper.

The mechanical orienting device described above has many drawbacks. Firstly, the sensor is often unable to read slight movements of the tracer, therefore it is difficult to identify small chamfers.

A further problem is that the dust that is created during the work cycle, over time dirties and stiffens the mechanisms which make it possible for the tracer to oscillate: consequently the reading carried out by the tracer itself is altered and the device is no longer able to determine the exact orientation of the cork stopper.

The dirt also contributes towards the malfunctioning of the return spring which makes it possible for the tracer to be repositioned. Due to such a malfunctioning, the cork stoppers are often damaged (chipping or partial breaking) during the passage through the tracer. This leads not only to an economic damage, related to the specific cost of the cork stopper itself, (which, if made from a natural material such as cork, can also be relatively high), but also to the risk of making bottles in which there are pieces of cork in the liquid contained inside them. Considering that the cork stoppers made of cork as described above are generally used for preserving fine wines, the fact that there are foreign elements inside the bottle is a defect that must be carefully avoided.

A second method for orienting cork stoppers is that which uses the force of gravity. Cork stoppers commonly have an end made with a natural cork portion that is connected to the main body of the cork usually made of a cork agglomerate. The natural cork portion has a lower density than the agglomerate so, during the falling, the cork tends to become naturally oriented towards the main body. Advantageously the end made with the natural cork is the non-chamfered one.

The main limitation of this method is related to the fact that it depends upon the composition of the corks: it is clear that corks entirely made of an agglomerate and corks made of materials like plastic etc. cannot be correctly oriented since there is not the difference in density that is necessary to allow for the orientation by gravity.

The orientation by gravity is not moreover suitable for large productions and does not allow the correct positioning of small-sized corks. Moreover, the high percentage error, due to the unreliability of the system, that can be attributed to the not always homogeneous density of the handled product, should be kept in mind.

The third orientation devices use optical sensors. In such devices an optical sensor, like for example a video-camera, detects the chamfered end of the cork and sends a signal to an actuator that, if necessary, rotates the cork according to the correct direction.

The implementation of these systems is not always easy and to program the sensor it is often necessary to use special software. Moreover, the system is particularly sensitive to both external light sources and to the dust present inside the working environment, both elements which alter the reading of the video-camera.

Analogous systems use, instead of videocameras, optical fibre spots. The optical reading of the chamfer is obtained through the direct reflection of the light beam emitted by the spot. Analogously to what has previously been described for the devices using video-cameras, the adjustment of the spots is extremely complex and moreover, if the reading spot is very small, the reading of the signal can be jammed by the dust or other foreign elements present in the working area.

The object of the present invention is that of solving the problems outlined above by providing a cork stoppers orienting device for orienting corks which is reliable, simple and that cannot be significantly affected by external factors such as dust or light sources.

A further object of the present invention is to provide a device that is capable of identifying corks that present defectiveness so that they can be discarded.

Such objects are achieved with a device for the orienting of cork stoppers for bottles according to the invention, the essential characteristics of which are defined in the first one of the attached claims.

The characteristics and the advantages of the device for the orienting of corks according to the invention will be apparent from the following description of one of its embodiments, given as an example and not for limiting purposes, with reference to the attached drawings, wherein:
- figure 1 is a side view of an orienting device according to the invention with pushing means in a retracted position corresponding to a resting position of the device and a cork T arranged in a first input position;
- figure 2 is a side view of the orienting device of figure 1 with the pushing means in an extended position and the cork T arranged in a second position for the detection of the orientation;

- figure 3 is a top view of the orienting device of figure 1;
- figures 4a and 4b are detailed views of a pneumatic tracer of the device with the cork in the correct and wrong orientation, respectively, which only schematically show pneumatic means and means for the electronic processing connected to it;
- figures 5a and 5b are detailed views of a variant of a pneumatic tracer of the device according to the invention with the cork in the correct and wrong orientation positions, respectively;
- figure 5c is a top view of the pneumatic tracer of figure 5a; and
- figure 5d is a top view of the pneumatic tracer of figure 5b.

With reference to said figures, the orienting device according to the invention is preferably used inside a bottling line the overall characteristics of which can be found in the prior art and is therefore neither illustrated nor described in detail. Inside said line the device according to the invention is preferably arranged in an upstream position with respect to a corking machine used for corking bottles (like for example bottles of spumante or sparkling wine in general) and in a downstream position with respect of a tank for the storage of corks with a chamfered end which have to be processed by the device for the aim to be available to the corking machine all oriented in the same direction, with respect to the chamfered end.

The device is arranged inside an external case (not shown in the figures) and is positioned on a support basement 1 to which said carter is fixed.

Overall, a cork T processed in the device, passes through three main positions, aligned according to a work direction X; more in particular, a first input position 10, a second detection position 20 wherein the position of the chamfered end of the cork is detected and finally a third orientation position 30 at which the corks are arranged all in the same direction i.e., according to the example illustrated, with the chamfered end facing towards the basement (such positions are indicated in the figures with reference numerals 1, 2 and 3).

Describing the device according to the invention in detail, a supplying duct 11 is arranged perpendicularly to the basement plane 1 and is suitable for containing the corks that have to be processed in the device and coming from a storage tank not shown in the figures. The corks are contained inside the duct 11 just like they are taken from the tank, or rather in a pell-mell manner, without a defined orientation. Moreover, they are aligned in the direction of their axis and face with one of the two flat sides towards the basement. The corks contained in the supplying duct 11 fall by gravity, one at a time, inside the device so that the cork T is arranged in the first input position 10. Pushing means of the cork stopper T, like for example a pusher 12, are arranged in correspondence of this first position; the pusher 12 is driven by a linear actuator 13 fixedly connected to the basement 1.

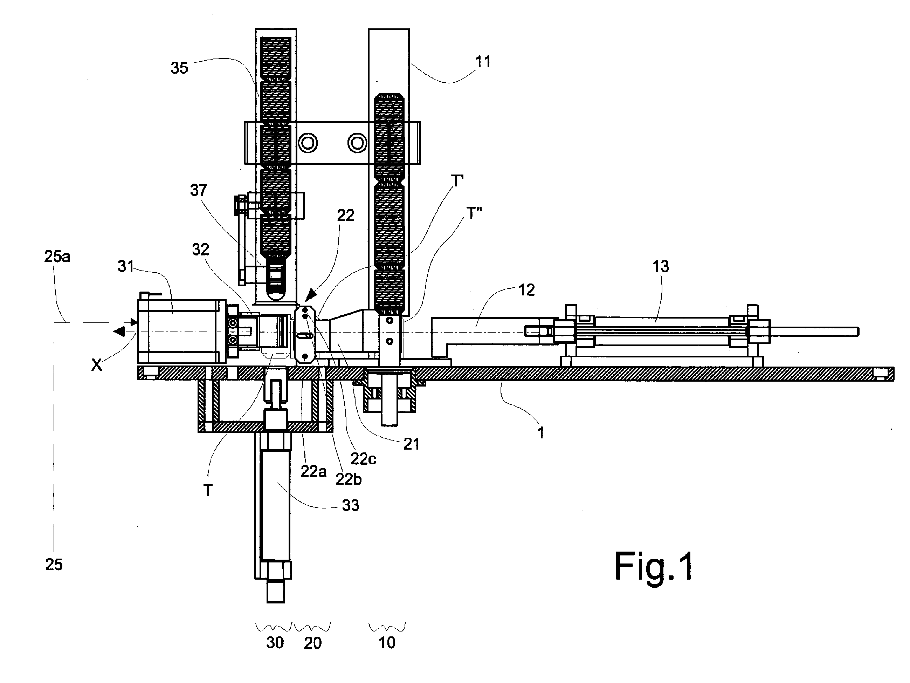

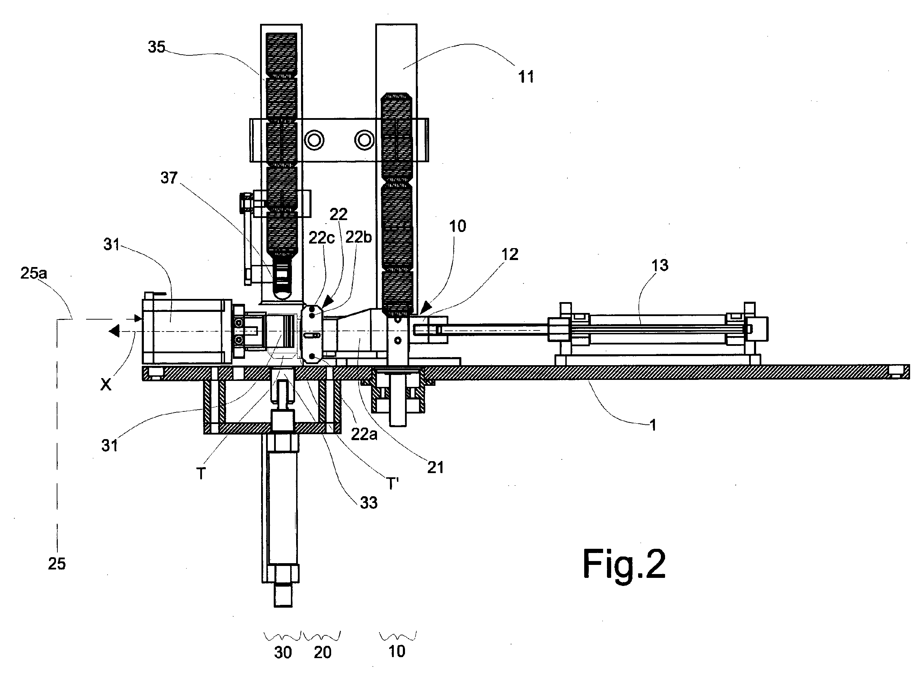

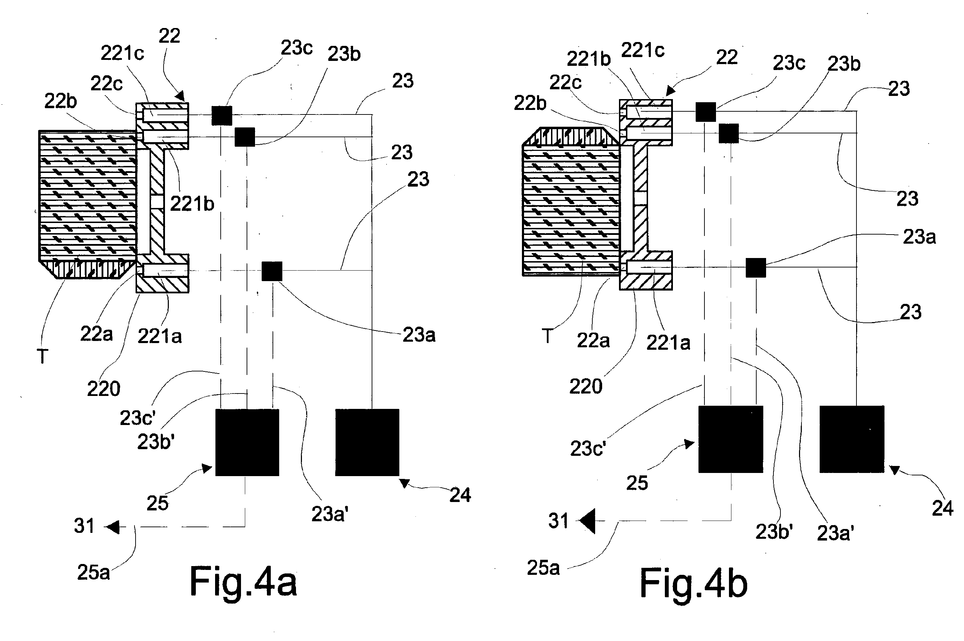

The pusher 12 translates, parallel with respect to the basement 1, according to the work direction X, from a retracted position, (as shown in figure 1) corresponding to a resting position of the device, to an extended position, (as shown in figure 2) relative to the position of the cork T at the second detection position 20. In the second position 20 the cork is stopped and centred by a self-centering vise 21, driven by a spring (not shown), which at the own ends presents detection means of the orientation of the cork itself consisting, according to the invention, of at least one pneumatic tracer 22 (figures 4a and 4b).

As shown in figures 4a and 4b, the pneumatic tracer 22 comprises a main body 220 on which seats 221a, 221b, 221c are formed; pipes 23 (schematically shown) are inserted inside the seats 221a, 221b, 221c, the pipes 23 coming from pneumatic means 24 (only schematised in the figures); the seats end with respective holes defining calibrated nozzles 22a, 22b, 22c. The body 220 is arranged perpendicularly to the basement 1 such as to be able to define a lower calibrated nozzle 22a (lower since it is near to the basement) and at least one upper calibrated nozzle; in the example described there are two upper calibrated nozzles 22b, 22c (upper since they are further away from the basement).

The nozzles 22a, 22b, 22c are connected to said pneumatic means 24 for the generation of compressed air, so that a jet of compressed air is emitted through the nozzles themselves to impact on the cork T arranged in the vise 21 in correspondence of the pneumatic tracer 22, as shall be described in detail further on in the description. Such pneumatic means consist, for example, of a compressor or a pneumatic plant.

Pressure transducers 23a, 23b, 23c (shown only in figures 4a and 4b through a simple schematic drawing) are also respectively associated to the calibrated nozzles 22a, 22b, 22c. The transducers are capable of detecting eventually variations of the pressure of the jet of compressed air and they are also arranged so as to intercept the pipes 23 associated at the nozzles. Pressure transducers are integrated systems, commonly used at the state of the art, which comprise both pressure variation measuring devices and the electronics necessary for processing such a measurement and for sending a corresponding signal to electronic processing means 25. The transducers are supplied by electric power supply means, not shown in the figures.

The transducers send the acquired information to the electronic processing means 25 through signals 23a', 23b' (or 23c'). The electronic processing means, schematized in the figures, are, for example, software systems capable of receiving and processing the information of the transducers themselves.

The output signal 25a from the processor 25 is sent to control the orientation means 31 operating at the third orientation position 30.

In particular, after the position 20, the cork T passes, as will be described in the following description, into position 30 in which it is held by said orientation means like a clamp 31. The clamp 31 is connected to power means like for example a stepper motor 32 that is integrally connected to the basement 1. Through the actuation of the stepper motor 32, the clamp is capable of rotating the cork held in it by a desired angle according to a rotation axis parallel to the work direction X. In particular, the clamp 31, and consequently the cork T, can rotate by 0°, 180° or alternatively by 90° degree.

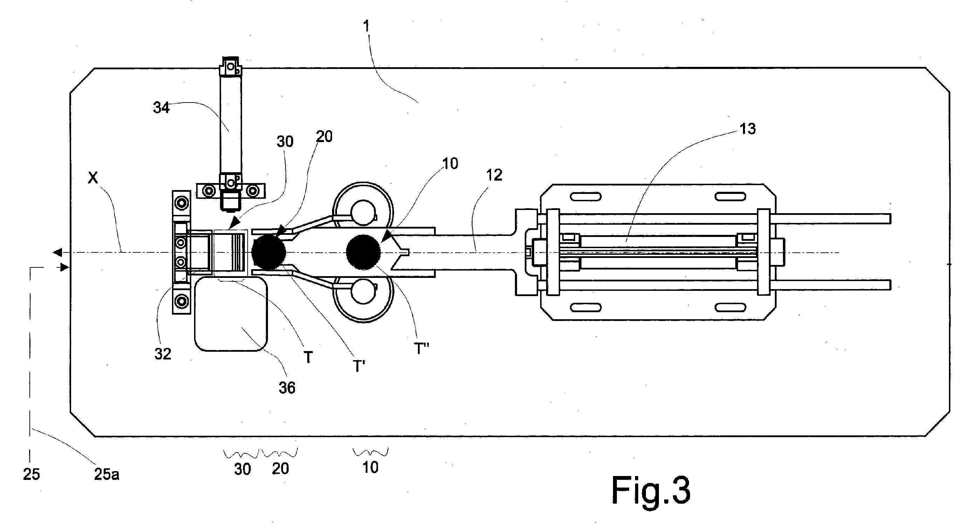

Ejection means such as linear actuators 33 (figures 1 and 2) and 34 (figure 3) push the cork T outside the position 3 towards the exit from the device.

In particular the first linear actuator 33 moves the cork T towards an output duct 35 vertically rising with respect to the basement 1. The first linear actuator 33 is arranged below the basement 1 on the opposite side with respect to that of the other elements constituting the device previously described; the first linear actuator is so able to exert a pushing action on the cork T, from the bottom to the top, orientated according to an axis that is perpendicular to the direction X so to insert the cork inside the output duct 35. The first actuator 33 is also controlled by the output signal 25a from the electronic processing means 25, which, impose the removal of the cork from the position 30.

As shown in figure 3, the second linear actuator 34 is arranged on the basement in a manner such as to move the cork T according to a direction that is perpendicular to the work direction X. The cork T is so pushed towards a discharge tank 36 which is, with respect to the second actuator 34, on the opposite side with respect to the line defined by the direction X.

According to what has been described, the orienting device according to the present invention works as follow described.

The cork T falls by gravity along the duct 11 and positions itself in the first input position 10. Once the cork is in the first position, the linear actuator 13 moves the pusher 12 so that the cork T is pushed until it takes up the subsequent second detection position 20, corresponding to the maximum extension of the pusher 12 itself. Once the pushing step is finished, the pusher 12 returns to the retracted position, corresponding to the resting position of the orienting device. Simultaneously, a subsequent cork T' occupies the first position 10, that has been left free by the cork T.

In the detection position 20 the cork T is detected so as to determine its orientation. According to the example shown in the figures, if the cork T has the chamfered face facing downwards, the orientation is considered correct; on the other hand, if the chamfered face is facing upwards, the orientation is considered wrong. As it should be clear, such a orientation only applies to the example illustrated and can be modified according to the specific use or the specific working requirements of each single application.

As already described, in the detection position 20 the cork T is stopped inside the self-centering vise 21 at the tracer 22. Through the pneumatic plant, the jet of pressurised air exits through the calibrated nozzles so as to impact on the cork T.

In order to allow the correct operation of the device exclusively two transducers are preferably arranged, one on the lower nozzle and one that can be aligned with that of the upper nozzles corresponding to the height of the cork to be analysed. Therefore, in such a configuration, the connection to the pneumatic means and consequently the detection through transducers is provided only on one of the upper nozzles, therefore the choice relative to which of the two nozzles 22b, 22c has to be activated must be made with reference to the type of corks to be analysed and to their height.

Therefore, the calibrated nozzles, and in particular the pressure transducers 23a and 23b (or 23c), perceive a pressure variation as a pressure fall, of the jet of air that impacts on the side on which there is the chamfer. The processor 25 thus analyses the signal 23a', 23b' (or 23c') coming from the transducers so as to determine the orientation of the cork.

In particular, if the pressure fall is recorded by only the transducer 23b (or 23c) connected to the upper nozzle 22b (or 22c) (figure 4b), the software 25 processes such an information and determines that the cork T is arranged according to the wrong orientation. On the other hand, as shown in figure 4a, if the pressure fall is detected on only the lower nozzle 22a the system determines that the cork T is in the correct position.

The information thus detected is processed by the electronic processing means 25 and is sent, through the control signal 25a, to the stepper motor 32. Simultaneously, once the orientation of the cork T has been detected, the cork T' is pushed by the pusher 12 to occupy the position 20. The cork T' thus, in turn, pushes the cork T to occupy the adjacent position 30 where it is held by the clamp 31.

As a function of the signal received by the processor, the motor 32 moves the clamp 31 to rotate by 0°, 180° or 90° degree. Indeed the software analyses and compares the signals of the two active transducers and manages them as an XOR logic gate, the orientation is thus carried out only if the result of the value of the two transducers is different from one another.

In particular, if the cork T is oriented correctly (or rather, the transducer has detected a pressure fall only on the lower nozzle 22a), the clamp does not rotate. If, on the other hand, the transducer detects a pressure fall only on the upper nozzle 22b (or 22c), the clamp must carry out a rotation of 180° so as to take the cork back into the correct position.

At this point the first ejection actuators 33 push the cork T, correctly oriented, into the output duct 35. As shown in figure 1, inside the output duct 35 there are stopping wheels 37 which allow the passage of the cork pushed by the ejection actuator 33 toward the exit but prevent it from returning in the opposite direction.

As mentioned, the transducers detect a pressure fall of the air jet sent by the nozzles 22a, 22b (or 22c) at the end of the chamfered cork. However, if the cork had both of its ends chamfered, the pressure fall is detected both on the upper nozzle 22b (or 22c) and on the lower nozzle 22a. On the other hand, if neither of the two ends were chamfered, neither of the nozzles detect a pressure fall. When such situations occur, or rather when the two transducers both give the same value, the processor drives the stepper motor so that the cork carries out a rotation of only 90° (figure 3). Once turned by 90°, the cork is pushed by the second ejection means 34 towards the tank 36 where it is collected so as to be subsequently discarded.

The orienting device according to the invention has the following advantages. Firstly, the air jet system is capable of detecting chamfers even having small dimensions and is not affected by external disturbance factors like dust or dirt generated in the working area. There is indeed always a light air flow through the nozzles that keeps the nozzles and the surrounding working area themselves clean, preventing the dust and the dirt from accumulating.

Again the device is capable of detecting possible defects of the cork (like for example ends that are not chamfered or on the other hand having both the ends chamfered). In this case at least two nozzles (an upper nozzle and the lower nozzle) detect the same signal or rather a pressure fall (in the case in which the cork has two chamfered ends) or, on the other hand, no pressure fall (in the case in which the cork has two ends that are not chamfered). Thanks to such a detection the faulty cork can be discarded before arriving at the corking machine, with a considerable reduction of the defects related to the bottling process and great time saving.

Moreover, the presence of two upper nozzles, 22b, 22c, makes it possible to process corks even having different heights. The device is thus adapted to process any type of cork aside from their shape, size or material.

Again, the orientation process is completely automated, so that the device according to the invention can be applied even to large productions.

In an alternative configuration of the orienting device according to the invention, pneumatic connections with pressurised transducers can be provided on all the nozzles. In this case, interruption means are provided that are capable of isolating the pressure line (or, alternatively the signal coming out from the transducer) relative to the upper nozzle that is not at the end of the cork.

The tracers 22 can be of the direct type, like those previously described, or alternatively of a cam type 22' as shown in figures from 5a to 5d.

As already mentioned, the pressure transducer 23a, 23b, 23c sends a signal if a sudden change in pression, due to the passage of air and to the impact on the chamfered surface of the cork is recorded on the nozzle 22a, 22b, 22c.

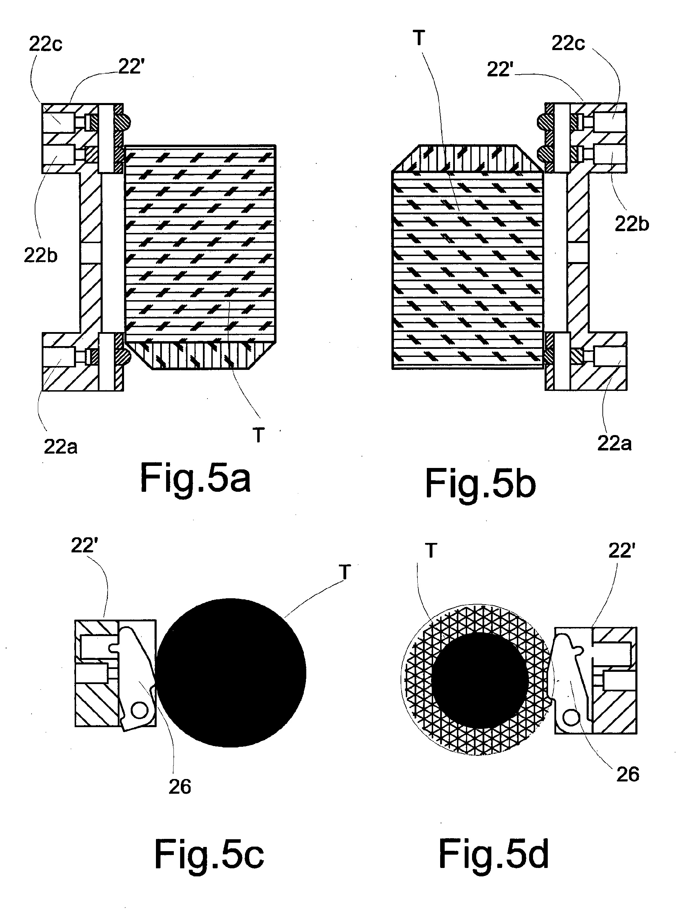

However, if at the nozzle there were a surface of the cork on which there was a localised defect (like, for example, a hole or a depression) a pressure variation would be detected in any case (due to the passage of air) that the transducer detects and the electronic processor 25 identifies as the chamfer; this leads to the sending of a false control signal 25a that controls the discarding of the cork, since it is considered faulty: indeed, if the defect is at the lower nozzle 22a (as shown in figure 5b), the nozzle 23a and the nozzle 23b (or 23c) (that detects the chamfer) provide the same information, therefore, for what has previously been described, the cork is discarded. However, a small localized defect, like for example a dip or a grain missing on the outer surface of the cork, are not a big enough problem to justify the discarding. In order to avoid such a problem the cam tracer 22' (shown in figures from 5a to 5d) has been foreseen which combines in addition to the air jet also the action of closing means of the nozzle, like for example, a cam 26. The cam 26 is driven by a pushing spring (not shown) which pushes it against the cork stopper, indeed the spring acts in a direction that is parallel to the jet of air from the nozzle itself (i.e. in a direction that is perpendicular to the vertical axis of the cork). In particular, the spring keeps the cam 26 pressed against the chamfer, when the chamfer is not present the resistance of the spring is overcome and the cam is pushed back providing for obstructing the nozzle and thus the passage of air. The cam thus makes it possible to read only the macroscopic type movements (of course, with respect to the dimensions of the cork and in particular of the chamfer). On the other hand, it does not detect movements when there are small depressions, therefore, in this case, it is kept pressed against the nozzle, obstructing it and providing the correct signal coming out. The cam tracer makes it possible to increase the efficiency of the device and to reduce the discarding errors of the corks that are considered to be faulty.

The present invention has been described with reference to preferred embodiments. It should be understood that there can be other embodiments falling within the same inventive concept, as defined by the scope of protection of the attached claims.

## Claims

1. A device for the orienting of corks with an end with a chamfer edge, comprising detection means (22, 22a, 22b, 22c, 23a, 23b, 23c) of the position of said chamfer edge of a cork (T), means (25) for the processing of an information (23a', 23b', 23c') coming out from said detection means (22, 22a, 22b, 22c, 23a, 23b, 23c) and orientation means (31, 32) adapted to orient said cork (T), said orientation means operating in response to a control signal (25a) coming out from said processing means (25), **characterized in that** said detection means comprise means (22a, 22b, 22c) to emit a jet of compressed air adapted to impact on said cork (T) and measurement means (23a, 23b, 23c) of a pressure variation of said air jet as a result of said impact, said control signal (25a) being determined by said pressure variation.

2. The device according to claim 1, wherein said detection means comprise at least one pneumatic tracer (22) on which housings for said means (22a, 22b, 22c) to the emission of said jet of compressed air are formed, said emitting means (22a, 22b, 22c) being associated with said measurement means (23a, 23b, 23c).

3. The device according to claim 2, wherein said emitting means (22a, 22b, 22c) comprise calibrated nozzles (22a, 22b, 22c) and said measuring means comprise pressure transducers (23a, 23b, 23c).

4. The device according to claim 2 or 3, wherein said processing means comprise software systems for receiving and processing said output information (23a', 23b', 23c') coming out from said pressure transducers (23a, 23b, 23c), said processing means being further adapted to send said control signal (25a) to said orientation means (31, 32).

5. The device according to claim 4, wherein said orientation means comprise a clamp (31) driven by power means such as a stepper motor (32), said clamp (31) being adapted to rotate of 180° or 90° to move said cork (T).

6. The device according to claim 2, wherein said at least one pneumatic tracer (22) is placed at the end of a self-centering vise (21) adapted to hold said cork (T), said pneumatic tracer being arranged perpendicularly to a basement (1) of said device, so that said nozzles (22a, 22b, 22c) are arranged to define a lower nozzle (22a) and at least one upper nozzle (22b, 22c), whereby, if said transducers record different signals on said lower nozzle (2a) and on said at least one upper nozzle (2b, 2c), said orientation means rotate said cork of 0° or 180°, while if said transducers record the same signal on said lower nozzle (2a) and said at least one upper nozzle (2b, 2c), said orientation means (31, 32) rotate said cork (T) of 90°.

7. The device according to claim 6, wherein first ejection means (33) act on said cork rotated of 0° or 180°, said first ejection means (33) are adapted to push said cork in a output duct (35) of said device, second ejection means (34) acting on said cork rotated of 90° to push said cork into a collection tank (36).

8. The device according to claim 7, wherein said first ejection means (33) are arranged at the side of said basement (1) opposite to the side which said output duct (35) is connected, said first ejection means (33) are further adapted to move said cork (T) in a direction perpendicular to a work direction (X) parallel to said basement (1).

9. The device according to claim 7, wherein said second ejection means (34) are connected to said basement (1) to move said cork (T) in a direction perpendicular to said work direction (X) to a tank (36) arranged on the opposite side to said work direction (X).

10. The device according to any one of the claims 7, 8 or 9, wherein said first expulsion means (33) and said second expulsion means (34) are linear actuators.

11. The device according to any one of the previous claims, wherein supplying means (11) of said cork (T) to said device are provided, said supplying means (11) comprising a supplying duct (11) vertically rising from said basement (1) and inside which said cork (T) is contained in a vertical position, said cork (T) being supplied to said device from said supplying duct by a gravity force.

12. The device according to claim 11, wherein said cork (T) coming out from said supplying duct (11) is in a first input position (10), pushing means (12, 13) act in correspondence to said first input position to move said cork (T) from said first position (10) to a detection position (20), said detection means (22, 22a, 22b, 22c, 23a, 23b, 23c) acting in correspondence of said detection position, said orientation means (31, 32) acting in correspondence of a third orientation position (30).

13. The device according to claim 12 wherein said pushing means comprise a pusher (12) connected to a linear actuator (13) so that said cork (T) can translate according to said working direction (X) in a parallel manner respect to said basement (1) under the action of said pusher (12),.

14. The device according to any one of claims 7 to 9, wherein internally to said output duct (35) stopping elements are provided (37) to allow the passage of the cork toward the exit and to prevent the return in the opposite direction.

15. The device according to any one of claims from 2 to 14, wherein closing means (26) are associated to each calibrated nozzle (22a, 22b, 22c) of said pneumatic transducer (22), said closing means being adapted to close or open said nozzle (22a, 22b, 22c) and consequently said closing means allowing or preventing the passage of air from the nozzle when said nozzle is in contact respectively with a non-chamfered or chamfered surface of said cork (T).

16. The device according to claim 15, wherein said closing means (26) comprise a cam (26) on which acts a pushing spring in the parallel direction to the direction of said air jet from said nozzle, so that when said cam is in contact with a non-chamfered surface of said cap (T) said spring is compressed and said cam (26) closes said nozzle (22a, 22b, 22c), and when said cam is in contact with a chamfered surface of said cork (T) said spring is extended and said cam (26) opens said nozzle (22a, 22b, 22c).

## Patentansprüche

1. Vorrichtung zum Ausrichten von Korken, mit einem Ende mit einem abgeschrägten Rand, enthaltend Detektionseinrichtungen (22, 22a, 22b, 22c, 23a, 23b, 23c) von der Position des abgeschrägten Randes eines Korkens (T), Einrichtungen (25) für die Verarbeitung einer Information (23a', 23b', 23c'), die aus den Detektionseinrichtungen (22, 22a, 22b, 22c, 23a, 23b, 23c) kommt, und Ausrichtungseinrichtungen (31, 32), die ausgelegt sind, um den Korken (T) auszurichten, wobei die Ausrichtungseinrichtungen in Abhängigkeit von einem Steuersignal (25a) arbeiten, das aus den Verarbeitungseinrichtungen (25) kommt, **dadurch gekennzeichnet, dass** die Detektionseinrichtungen Einrichtungen (22a, 22b, 22c), um einen Strahl von Druckluft auszustoßen, der ausgelegt ist, um sich auf den Korken (T) auszuwirken, und Messeinrichtungen (23a, 23b, 23c) einer Druckvariation des Luftstrahls als ein Ergebnis dieser Auswirkung enthalten, wobei das Steuersignal (25a) durch diese Druckvariation bestimmt ist.

2. Vorrichtung nach Anspruch 1, wobei die Detektionseinrichtungen wenigstens einen pneumatischen Verfolger (22) enthalten, an dem Gehäuse für die Einrichtungen (22a, 22b, 22c) zum Ausstoßen des Strahls von Druckluft ausgebildet sind, wobei die Ausstoßeinrichtungen (22a, 22b, 22c) zugehörig sind zu den Messeinrichtungen (23a, 23b, 23c).

3. Vorrichtung nach Anspruch 2, wobei die Ausstoßeinrichtungen (22a, 22b, 22c) kalibrierte Düsen (22a, 22b, 22c) enthalten und die Messeinrichtungen Druckmessfühler (23a, 23b, 23c) enthalten.

4. Vorrichtung nach Anspruch 2 oder 3, wobei die Verarbeitungseinrichtungen Softwaresysteme zum Empfangen und Verarbeiten der Ausgabeinformationen (23a', 23b', 23c') enthalten, die aus den Druckmessfühlern (23a, 23b, 23c) kommen, wobei die Verarbeitungseinrichtungen ferner ausgelegt sind, um das Steuersignal (25a) zu den Ausrichtungseinrichtungen (31, 32) zu senden.

5. Vorrichtung nach Anspruch 4, wobei die Ausrichtungseinrichtungen eine Klammer (31) enthalten, die von Leistungseinrichtungen, wie einem Schrittmotor (32), angetrieben wird, wobei die Klammer (31) ausgelegt ist, um sich um 180° oder 90° zu drehen, um den Korken (T) zu bewegen.

6. Vorrichtung nach Anspruch 2, wobei wenigstens ein pneumatischer Verfolger (22) am Ende eines sich selbst zentrierenden Spannstockes (21) angeordnet ist, der ausgelegt ist, um den Korken (T) zu halten, wobei der pneumatische Verfolger senkrecht zu einer Basis (1) der Vorrichtung angeordnet ist, so dass die Düsen (22a, 22b, 22c) angeordnet sind, um eine untere Düse (22a) und wenigstens eine obere Düse (22b, 22c) zu definieren, wodurch, wenn die Verfolger verschiedene Signale an der unteren Düse (22a) und an der wenigstens einen oberen Düse (22b, 22c) aufzeichnen, die Ausrichtungseinrichtungen den Korken um 0° oder 180° drehen, während, wenn die Verfolger dasselbe Signal an der unteren Düse (22a) und der wenigstens einen oberen Düse (22b, 22c) aufzeichnen, die Ausrichtungseinrichtungen (31, 32) den Korken (T) um 90° drehen.

7. Vorrichtung nach Anspruch 6, wobei erste Auswurfeinrichtungen (33) auf den Korken wirken, der um 0° oder 180° gedreht wurde, wobei die ersten Auswurfeinrichtungen (33) ausgelegt sind, um den Korken in eine Ausgabeleitung (35) der Vorrichtung zu schieben, wobei zweite Auswurfeinrichtungen (34) auf den Korken wirken, der um 90° gedreht wurde, um den Korken in einen Sammeltank (36) zu schieben.

8. Vorrichtung nach Anspruch 7, wobei die ersten Auswurfeinrichtungen (33) an der Seite der Basis (1) entgegengesetzt zu der Seite angeordnet sind, mit der die Ausgabeleitung (35) verbunden ist, wobei die ersten Auswurfeinrichtungen (33) ferner ausgelegt sind, um den Korken (T) in eine Richtung senkrecht zu einer Arbeitsrichtung (X) parallel zu der Basis 1 zu bewegen.

9. Vorrichtung nach Anspruch 7, wobei die zweiten Auswurfeinrichtungen (34) mit der Basis (1) verbunden sind, um den Korken (T) in eine Richtung senkrecht zu der Arbeitsrichtung (X) zu einem Tank (36) zu bewegen, der an der entgegengesetzten Seite zu der Arbeitsrichtung (X) angeordnet ist.

10. Vorrichtung nach einem der Ansprüche 7, 8 oder 9, wobei die ersten Auswurfeinrichtungen (33) und die zweiten Auswurfeinrichtungen (34) lineare Aktuatoren sind.

11. Vorrichtung nach einem der vorhergehenden Ansprüche, wobei Zufuhreinrichtungen (11) von dem Korken zu der Vorrichtung vorgesehen sind, wobei die Zufuhreinrichtungen (11) eine Zufuhrleitung (11) enthalten, die vertikal von der Basis (1) aufsteigt und innerhalb der der Kork (T) in einer vertikalen Position enthalten ist, wobei der Kork (T) zu der Vorrichtung von der Zufuhrleitung (11) durch Schwerkraft zugeführt wird.

12. Vorrichtung nach Anspruch 11, wobei der Kork (T), der aus der Zufuhrleitung (11) herauskommt, in einer ersten Eingabeposition (10) ist, wobei Schiebeeinrichtungen (12, 13) entsprechend der ersten Eingabeposition wirken, um den Korken (T) von der ersten Position (10) zu einer Detektionsposition (20) zu bewegen, wobei die Detektionseinrichtungen (22, 22a, 22b, 22c, 23a, 23b, 23c) entsprechend der Detektionsposition wirken, wobei die Ausrichtungseinrichtungen (31, 32) entsprechend einer dritten Ausrichtungsposition (30) wirken.

13. Vorrichtung nach Anspruch 12, wobei die Schiebeeinrichtungen einen Schieber (12) enthalten, der mit einem linearen Aktuator (13) verbunden ist, so dass sich der Korken (T) entsprechend der Arbeitsrichtung (X) in einer parallelen Weise bezüglich der Basis (1) unter der Wirkung des Schiebers (12) versetzen kann.

14. Vorrichtung nach einem der Ansprüche 7 bis 9, wobei intern bezüglich der Ausgabeleitung (35) Stoppelemente (37) vorgesehen sind, um den Durchgang des Korkens zu dem Ausgang zu gestatten und die Umkehr in der entgegengesetzten Richtung zu verhindern.

15. Vorrichtung nach einem der Ansprüche 2 bis 14, wobei Schließeinrichtungen (26) mit jeder kalibrierten Düse (22a, 22b, 22c) des pneumatischen Verfolgers (22) verbunden sind, wobei die Schließeinrichtungen ausgelegt sind, um die Düse (22a, 22b, 22c) zu schließen oder zu öffnen, und folglich die Schließeinrichtungen den Durchgang von Luft von der Düse gestatten oder verhindern, wenn die Düse jeweils in Kontakt mit einer nicht abgeschrägten oder einer abgeschrägten Oberfläche des Korkens (T) ist.

16. Vorrichtung nach Anspruch 15, wobei die Schließeinrichtungen (26) eine Nocke (26) enthält, auf die eine Druckfeder in der parallelen Richtung zu der Richtung des Luftstrahls von der Düse wirkt, so dass, wenn die Nocke in Kontakt mit einer nicht abgeschrägten Oberfläche des Korkens (T) ist, die Feder zusammengedrückt ist und die Nocke (26) die Düse (22a, 22b, 22c) schließt, und, wenn die Nocke in Kontakt mit einer abgeschrägten Oberfläche des Korkens (T) ist, die Feder ausgedehnt ist und die Nocke (26) die Düse (22a, 22b, 22c) öffnet.

## Revendications

1. Dispositif pour orienter des bouchons de liège ayant une extrémité avec un bord chanfreiné, comprenant des moyens de détection (22, 22a, 22b, 22c, 23a, 23b, 23c) de la position du dit bord chanfreiné d'un bouchon de liège (T), des moyens (25) de traitement d'informations (23a', 23b', 23c') émises par lesdits moyens de détection (22, 22a, 22b, 22c, 23a, 23b, 23c) et des moyens d'orientation (31, 32) adaptés pour orienter ledit bouchon de liège (T), lesdits moyens d'orientation fonctionnant en réponse à un signal de commande (25a) émis par lesdits moyens de traitement (25), **caractérisé en ce que** lesdits moyens de détection comportent des moyens (22a, 22b, 22c) pour projeter un jet d'air comprimé adapté pour venir en impact sur ledit bouchon de liège (T) et des moyens de mesure (23a, 23b, 23c) d'une variation de pression du dit jet d'air en raison du dit impact, ledit signal de commande (25a) étant déterminé par ladite variation de pression.

2. Le dispositif selon la revendication 1, dans lequel lesdits moyens de détection comportent au moins un traceur pneumatique (22) sur lequel sont réalisés des logements pour lesdits moyens (22a, 22b, 22c) pour la projection du dit jet d'air comprimé, lesdits moyens pour cette projection (22a, 22b, 22c) étant associés aux dits moyens de mesure (23a, 23b, 23c).

3. Le dispositif selon la revendication 2, dans lequel lesdits moyens de projection (22a, 22b, 22c) comportent des buses calibrées (22a, 22b, 22c) et lesdits moyens de mesure comportent des transducteurs de pression (23a, 23b, 23c).

4. Le dispositif selon l'une des revendications 2 et 3, dans lequel lesdits moyens de traitement comportent des systèmes de logiciels pour recevoir et traiter lesdites informations de sortie (23a', 23b', 23c') provenant des dits transducteurs de pression (23a, 23b, 23c), lesdits moyens de traitement étant en outre adaptés pour envoyer ledit signal de commande (25a) aux dits moyens d'orientation (31, 32).

5. Le dispositif selon la revendication 4, dans lequel lesdits moyens d'orientation comportent une pince (31) pilotée par des moyens de puissance tels qu'un moteur pas à pas (32), ladite pince (31) étant adaptée pour faire tourner ledit bouchon de liège (T) d'un mouvement de 180° ou de 90°.

6. Le dispositif selon la revendication 2, dans lequel ledit au moins un traceur pneumatique (22) est situé à l'extrémité d'une pince d'auto-centrage (21) adaptée pour maintenir ledit bouchon de liège (T), ledit le traceur pneumatique étant agencé perpendiculairement à une embase (1) du dit dispositif, de sorte que lesdites buses (22a, 22b, 22c) sont agencées pour définir une buse inférieure (22a) et au moins une buse supérieure (22b, 22c), par lesquelles, si lesdits transducteurs enregistrent des signaux différents sur ladite buse inférieure (2a) et sur ladite au moins une buse supérieure (2b, 2c), lesdits moyens d'orientation pivotent ledit bouchon de liège de 0° ou de 180°, tandis que, si lesdits transducteurs enregistrent le même signal sur ladite buse inférieure (2a) et sur ladite au moins une buse supérieure (2b, 2c), lesdits moyens d'orientation (31, 32) pivotent ledit le bouchon de liège (T) de 90°.

7. Le dispositif selon la revendication 6, dans lequel des premiers moyens d'éjection (33) agissent sur ledit bouchon de liège tourné de 0° ou de 180°, lesdits premiers moyens d'éjection (33) sont adaptés pour pousser ledit bouchon de liège dans une conduite de sortie (35) du dit dispositif, des seconds moyens d'éjection (34) agissant sur ledit bouchon de liège tourné de 90° pour pousser ledit bouchon de liège dans un réservoir de récupération (36).

8. Le dispositif selon la revendication 7, dans lequel lesdits premiers moyens d'éjection (33) sont agencés sur le côté de ladite embase (1) opposé au côté auquel est reliée ladite conduite de sortie (35), lesdits premiers moyens d'éjection (33) sont en outre adaptés pour déplacer ledit le bouchon de liège (T) dans une direction perpendiculaire à une direction de travail (X) parallèle à ladite embase (1).

9. Le dispositif selon la revendication 7, dans lequel lesdits seconds moyens d'éjection (34) sont reliés à ladite embase (1) pour déplacer le bouchon de liège (T) dans une direction perpendiculaire à ladite direction de travail (X) vers un réservoir (36) disposé sur le côté opposé à ladite direction de travail (X).

10. Le dispositif selon l'une quelconque des revendications 7, 8 et 9, dans lequel lesdits premiers moyens d'éjection (33) et lesdits seconds moyens d'éjection (34) sont des vérins linéaires.

11. Le dispositif selon l'une quelconque des revendications précédentes, dans lequel sont prévus des moyens d'alimentation (11) du dit dispositif en ledit bouchon de liège (T), lesdits moyens d'alimentation (11) comportant une conduite d'alimentation (11) s'élevant verticalement à partir de ladite embase (1) et à l'intérieur de laquelle est contenu ledit bouchon de liège (T) dans une position verticale, ledit bouchon de liège (T) alimentant ledit dispositif à partir du dit conduit d'alimentation par force de gravitation.

12. Le dispositif selon la revendication 11, dans lequel ledit bouchon de liège (T) sortant de ladite conduite d'alimentation (11) est dans une première position d'entrée (10), des moyens de poussée (12, 13) agissent en correspondance de ladite première position d'entrée pour déplacer ledit bouchon de liège (T), de ladite première position (10) à une position de détection (20), lesdits moyens de détection (22, 22a, 22b, 22c, 23a, 23b, 23c) agissant en correspondance de ladite position de détection, lesdits moyens d'orientation (31, 32) agissant en correspondance d'une troisième position d'orientation (30).

13. Le dispositif selon la revendication 12, dans lequel lesdits moyens de poussée comportent un poussoir (12) relié à un vérin linéaire (13) de façon que ledit bouchon de liège (T) puisse se translater selon ladite direction de travail (X) parallèlement à ladite embase (1) sous l'action du dit poussoir (12).

14. Le dispositif selon l'une quelconque des revendications 7 à 9, dans lequel sont prévus des éléments d'arrêt (37) à l'intérieur de ladite conduite de sortie (35) pour permettre le passage du bouchon de liège vers la sortie et pour empêcher son retour dans la direction opposée.

15. Le dispositif selon l'une quelconque des revendications 2 à 14, dans lequel des moyens fermeture (26) sont associés à chaque buse calibrée (22a, 22b, 22c) du dit transducteur pneumatique (22), lesdits moyens de fermeture étant agencés pour fermer ou ouvrir ladite buse (22a, 22b, 22c) et lesdits moyens de fermeture permettant ou empêchant en conséquence le passage d'air provenant de la buse quand ladite buse est en contact respectivement avec une surface non-chanfreinée ou chanfreinée du dit bouchon de liège (T).

16. Le dispositif selon la revendication 15, dans lequel lesdits moyens de fermeture (26) comportent une came (26) sur laquelle agit un ressort de poussée dans la direction parallèle à la direction du dit jet d'air émis par ladite buse, de sorte que quand ladite came est en contact avec une surface non-chanfreinée du dit bouchon de liège (T) ledit ressort est comprimé et ladite came (26) ferme ladite buse (22a, 22b, 22c), et quand ladite came est en contact avec une surface chanfreinée du dit bouchon de liège (T) ledit ressort est allongé et ladite came (26) ouvre ladite buse (22a, 22b, 22c).
